# FASCICULE DE BREVET EUROPEEN

(11) **EP 3 871 381 B1**
(45) Date de publication et mention de la délivrance du brevet: **10.04.2024**
(21) Numéro de dépôt: 19806026.1
(22) Date de dépôt: 16.10.2019
(51) Int. Cl.: H04L 45/64, H04L 45/00, H04L 9/40

(54) **TECHNIQUE DE COLLECTE D'INFORMATIONS RELATIVES À UN FLUX ACHEMINÉ DANS UN RÉSEAU**
VERFAHREN ZUM SAMMELN VON INFORMATIONEN BEZÜGLICH EINES IN EINEM NETZWERK GEROUTETEN DATENSTROMS
TECHNIQUE FOR GATHERING INFORMATION RELATING TO A STREAM ROUTED IN A NETWORK

(30) Priorité: 23.10.2018 FR 1859793
(43) Date de publication de la demande: 01.09.2021
(73) Titulaire: Orange, 92130 Issy-les-Moulineaux (FR)
(72) Inventeur: LAZRI, Kahina, 92326 CHÂTILLON CEDEX (FR); LANIEPCE, Sylvie, 92326 CHÂTILLON CEDEX (FR)
(86) Numéro de dépôt international: PCT/FR2019/052449
(87) Numéro de publication internationale: WO 2020/084222

(56) Documents cités:
- US-A1- 2014 189 867
- US-A1- 2018 152 475

## Description

L'invention se rapporte au domaine général des télécommunications.

L'invention concerne plus particulièrement une technique de collecte d'informations relatives à un flux acheminé dans un réseau de communication. Elle trouve une application particulièrement intéressante dans le cadre de la sécurité des réseaux, plus précisément de la sécurité des extrémités de réseau, et notamment dans la protection contre des attaques par déni de service.

La technique de collecte se situe dans le domaine des réseaux de communication, pour lesquels le plan de données et le plan de contrôle sont découplés. Un tel réseau comprend dans un plan de données des dispositifs de traitement de paquets, configurés pour traiter des paquets en fonction de règles de traitement de flux et dans un plan de contrôle au moins un dispositif de contrôle, configuré pour contrôler des dispositifs de traitement de paquets, notamment pour gérer les règles de traitement de flux qu'ils appliquent. Ces réseaux sont également connus sous le nom de réseau de communication défini par logiciel ou SDN pour « *Software Defined Networking* ». De façon connue, une architecture de réseau SDN permet de découpler les plans de contrôle et de données en centralisant l'intelligence du réseau (c'est-à-dire les fonctions de contrôle du réseau) au niveau d'un dispositif de contrôle. Le comportement des dispositifs de traitement est alors défini par des règles de traitement de flux reçues du dispositif de contrôle, telles que des règles de traitement ou de transfert des données (i.e. du trafic). Le concept SDN s'appuie sur le protocole de communication OpenFlow^{™} défini par l'ONF (*Open Networking Foundation*)*,* qui permet une programmation simplifiée, via une interface standard, des dispositifs de traitement.

Par ailleurs, on connaît plusieurs types d'attaques par déni de services (on parle habituellement de DoS, pour « *Denial of Service* ») ou de DDoS, pour « *Distributed Denial of Service* ») : les attaques par déni de service réseau et les attaques par déni de service applicatif.

Les attaques par déni de service réseau consistent en l'envoi d'un nombre important de paquets réseau à un service cible, par exemple un équipement d'un réseau ou un serveur Web, de manière à mobiliser les ressources dans le traitement de ces paquets. Cela a pour conséquence de saturer les ressources du service cible et de rendre ces ressources non disponibles pour le traitement de requêtes légitimes. Les attaques par déni de service réseau se caractérisent principalement par l'envoi d'une quantité significative de paquets réseau. Une variante plus sévère de cette attaque est l'attaque par déni de service distribué, dans laquelle l'attaquant utilise plusieurs sources pour attaquer une ou plusieurs cibles. Ce type d'attaque peut être mené grâce à un groupe d'ordinateurs sources infectés par un logiciel malveillant (« *malware* »). Ce type d'attaque est communément appelé attaque par réflexion : l'attaquant envoie un flux vers plusieurs ordinateurs qui vont les transférer vers une même cible, devenant eux-mêmes des sources.

La détection de telles attaques repose principalement sur une analyse quantitative des requêtes reçues par un équipement du réseau ou du service cible. Les attaques par déni de service sont très fréquentes du fait de la facilité de leur mise en oeuvre. Les mécanismes de détection actuels sont basés principalement sur l'analyse des paquets reçus par une adresse IP de destination. Deux modes d'analyse principaux pour la détection de ce type d'attaque existent :
- Filtrage en bordure : un filtrage à l'entrée d'un réseau de communication à protéger est mis en place. Pour cela, des pare-feux peuvent être prévus pour bloquer certains protocoles de transport, des ports ou des adresses IP qui sont sur liste noire. Ces pare-feux à état peuvent aussi jouer le rôle de limitateurs de trafic en bloquant, à partir d'un certain seuil préconfiguré de volumétrie de trafic, certaines adresses IP sources à destination d'une adresse IP de destination. Toutefois, le pare-feu ou le répartiteur de charge utilisé pour le filtrage en bordure est exposé au trafic non filtré et peut lui-même être la première victime du DDoS. De plus, cette approche n'est efficace que pour la détection d'attaques connues (adresses IP sources, protocoles, suite suspecte et connue malveillante de paquets à destination d'une adresse IP donnée) ;
- Redirection vers un équipement ou sonde spécialisé(e) : le trafic à destination d'une adresse IP donnée est redirigé vers une sonde spécialisée pour analyse. Ces sondes implémentent des algorithmes avancés d'apprentissage et ont des capacités d'analyse avancées, en fonction de la localisation géographique, de protocoles applicatifs, d'analyse de flux chiffrés, etc. Toutefois, la réaction n'est pas immédiate et requiert quelques minutes (pendant lesquelles l'infrastructure reste exposée à l'attaque). Lorsque l'architecture réseau le permet, la sonde peut être placée en coupure. Dans le cas contraire, il est nécessaire d'effectuer une redirection au moyen d'une modification du routage du trafic pour rediriger l'ensemble du trafic légitime et malveillant vers cette sonde. Cela peut produire en cas de mauvais paramétrages une détection inefficace voire une perte de trafic légitime.

Ainsi, les techniques actuelles de détection d'attaques par déni de service effectuent une analyse statistique du trafic réseau (saturation des ressources, protocole de transport suspect (par exemple UDP pour *User Datagram Protocol*)*,* port suspect, etc.) vers une cible donnée. Le trafic considéré malveillant est bloqué ou redirigé et la détection se fait souvent en fonction d'une adresse IP source donnée pour la protection d'une adresse IP destination donnée.

La publication brevet US2018/152475A1 décrit un système de détection d'attaques DDoS à partir d'informations de flux collectées auprès des dispositifs de traitement Openflow^{™}.

Un des buts de l'invention est de remédier à des insuffisances/inconvénients de l'état de la technique et/ou d'y apporter des améliorations.

Selon un premier aspect, l'invention a pour objet un procédé de collecte d'informations relatives à un flux acheminé dans un réseau de communication. Ce réseau comprend dans un plan de données des dispositifs de traitement de paquets, configurés pour traiter des paquets en fonction de règles de traitement de flux et dans un plan de contrôle au moins un dispositif de contrôle, configuré pour contrôler des dispositifs de traitement de paquets et pour gérer lesdites règles de traitement de flux Le procédé comprend pour un dispositif d'analyse :
- une identification d'au moins une règle de traitement de flux configurée pour traiter un flux comprenant une première caractéristique associée à un premier dispositif d'extrémité d'un flux à rechercher dans le réseau de communication et appliquée par un dispositif de traitement ;
- une détermination d'une deuxième caractéristique associée à un deuxième dispositif d'extrémité à partir de la règle de traitement identifiée.

Un flux de paquets ou flux réseau est caractérisé par un ensemble de valeurs présentes dans des champs d'une entête du paquet, permettant un acheminement des paquets de ce flux dans un réseau de communication. Le flux réseau est en particulier caractérisé par deux dispositifs d'extrémité, un des deux dispositifs correspondant au dispositif émetteur du flux réseau et l'autre dispositif correspondant au dispositif récepteur du flux réseau.

Grâce à cette technique de collecte d'informations, il est ainsi possible d'identifier dans un réseau de communication des deuxièmes dispositifs d'extrémité d'un flux ayant pour extrémité un premier dispositif auquel est associée la première caractéristique. Un flux à rechercher est un flux dont les caractéristiques ont été identifiées lors d'une analyse de sécurité. La première caractéristique correspond par exemple à une adresse source associée à un des dispositifs d'extrémité d'un flux attaquant, correspondant dans cet exemple à un dispositif émetteur. Cette technique permet ainsi d'identifier d'autres cibles d'une attaque par déni de service en cours initiée par le dispositif émetteur. Cette technique permet également d'identifier des ordinateurs utilisés en tant que sources par un attaquant pour attaquer une ou plusieurs cibles dans le cas d'une attaque par déni de service distribué. Cette technique permet en outre d'identifier d'autres sources d'une attaque par déni de service distribué à partir d'une adresse de destination associée à un des dispositifs d'extrémité d'un flux attaquant, correspondant dans cet exemple à un dispositif récepteur.

La technique proposée tire ainsi parti de la vue centralisée dont bénéficie un dispositif d'analyse adapté pour communiquer avec un dispositif de contrôle, au travers des règles de traitement de flux que le dispositif de contrôle gère, permettant ainsi à un opérateur du réseau d'obtenir des informations relatives à une attaque par déni de service. Ceci permet de réduire les délais de réaction en présence d'une attaque détectée.

Les différents modes ou caractéristiques de réalisation mentionnés ci-après peuvent être ajoutés indépendamment ou en combinaison les uns avec les autres, au procédé de collecte tel que défini précédemment.

Dans un mode de réalisation particulier, le procédé de collecte comprend une obtention de la première caractéristique associée au premier dispositif d'extrémité d'un flux à rechercher dans le réseau de communication.

Dans un mode de réalisation particulier, le procédé de collecte comprend une commande d'installation dans au moins un dispositif de traitement d'une règle de traitement spécifique à la première caractéristique et à la deuxième caractéristique.

Dans ce mode de réalisation particulier, le procédé tire ainsi parti du fait que le dispositif d'analyse peut commander au dispositif de contrôle une installation de nouvelles règles de traitement dans les dispositifs de traitements qu'il contrôle. Une nouvelle règle de traitement spécifique est ainsi installée par le dispositif de contrôle dans un ou des dispositifs de traitement. Les acheminements dans le réseau évoluant dynamiquement, il est préférable d'installer la règle de traitement spécifique dans l'ensemble du réseau lorsque l'observation du flux attaquant est nécessaire.

Dans un mode de réalisation particulier, lorsque la règle de traitement identifiée est configurée pour traiter au moins un deuxième flux distinct du flux à rechercher, le procédé de collecte comprend une commande d'installation dans le dispositif de traitement appliquant la règle identifiée d'une règle de traitement spécifique à la première caractéristique et à la deuxième caractéristique.

Dans ce mode de réalisation particulier, la règle de traitement spécifique est installée dans un dispositif de traitement qui a été identifié comme contribuant à l'acheminement du flux à rechercher. Ce dispositif de traitement applique la règle de traitement qui a été identifiée comme étant configurée pour traiter un flux comprenant la première caractéristique. Cette nouvelle règle de traitement spécifique va permettre de déterminer si ce dispositif de traitement identifié achemine bien des paquets du flux à rechercher. En effet, dans ce mode de réalisation particulier, la règle de traitement qui a été identifiée est une règle englobant le flux à rechercher. La nouvelle règle de traitement spécifique permet ainsi d'écarter le dispositif de traitement appliquant la règle de traitement identifiée lorsqu'il ne contribue pas finalement au traitement du flux à rechercher.

Selon une caractéristique particulière, le procédé de collecte comprend une obtention d'une information représentative d'une activité de la règle de traitement spécifique.

Une fois une règle de traitement spécifique installée dans le dispositif de traitement, le dispositif d'analyse peut obtenir par l'intermédiaire du dispositif de contrôle différentes informations pour déterminer si la règle de traitement spécifique a été active pendant une période d'observation. Il peut s'agir d'un compteur mis en oeuvre au niveau du dispositif de traitement et comptabilisant un nombre de paquets traités par la règle de traitement spécifique. Il peut également s'agir d'une notification envoyée du dispositif de traitement au dispositif de contrôle indiquant que la règle de traitement spécifique n'est pas active, envoyée par exemple à l'expiration d'une temporisation.

L'obtention du compteur permet également à l'opérateur du réseau de quantifier l'impact de l'attaque par déni de service.

Dans un mode de réalisation particulier, le flux à rechercher est en outre caractérisé par une adresse de destination et une installation d'une règle de traitement spécifique est commandée dans au moins un dispositif de traitement, ladite règle de traitement spécifique étant configurée pour traiter des flux comprenant la première caractéristique et à destination d'un sous-réseau auquel appartient l'adresse de destination.

Dans ce mode de réalisation particulier, le procédé tire ainsi parti du fait que le dispositif d'analyse peut commander au dispositif de contrôle une installation d'une nouvelle règle de traitement spécifique dans un dispositif de traitement. Cette nouvelle règle de traitement va permettre d'étendre la collecte d'informations relatives au flux recherché à des dispositifs récepteurs appartenant à un même sous-réseau que la cible de l'attaque. Il est alors possible par exemple d'analyser le comportement de l'accès réseau d'une entreprise qui est soumise à une attaque et de juger de la saturation de ses accès réseau.

Selon un deuxième aspect, l'invention concerne un dispositif d'analyse adapté à communiquer avec un dispositif de contrôle. Le dispositif de contrôle est rattaché à un plan de contrôle dans un réseau de communication et est configuré pour contrôler des dispositifs de traitement de paquets rattachés à un plan de données dans ledit réseau et pour gérer des règles de traitement de flux appliquées par lesdits dispositifs de traitement pour traiter des paquets. Le dispositif d'analyse comprend :
- un module d'identification, agencé pour identifier au moins une règle de traitement de flux configurée pour traiter un flux comprenant une première caractéristique associée à un premier dispositif d'extrémité d'un flux à rechercher dans le réseau de communication et appliquée par un dispositif de traitement ;
- un module de détermination, agencé pour déterminer une deuxième caractéristique associée à un deuxième dispositif d'extrémité à partir de la règle de traitement identifiée.

Les avantages énoncés pour le procédé de collecte d'informations relatives à un flux acheminé dans un réseau de communication selon le premier aspect sont transposables directement à un dispositif d'analyse.

Dans un mode de réalisation particulier, le dispositif d'analyse comprend un module d'obtention de la première caractéristique associée à un premier dispositif d'extrémité d'un flux à rechercher dans le réseau de communication.

Ce dispositif d'analyse peut bien entendu comporter en termes structurels les différentes caractéristiques relatives au procédé de collecte d'informations tel que décrit précédemment, qui peuvent être combinées ou prises isolément.

Selon un troisième aspect, l'invention concerne un système de collecte d'informations relatives à un flux acheminé dans un réseau de communication. Ce système comprend dans un plan de données des dispositifs de traitement de paquets, configurés pour traiter des paquets en fonction de règles de traitement de flux, dans un plan de contrôle au moins un dispositif de contrôle, configuré pour contrôler des dispositifs de traitement de paquets et pour gérer lesdites règles de traitement de flux, et un dispositif d'analyse selon le deuxième aspect.

Les avantages énoncés pour le procédé de collecte d'informations relatives à un flux acheminé dans un réseau de communication selon le premier aspect sont transposables directement au système de collecte.

Selon un quatrième aspect, l'invention concerne un programme pour un dispositif d'analyse, comprenant des instructions de code de programme destinées à commander l'exécution des étapes du procédé de collecte d'informations relatives à un flux acheminé précédemment décrit mises en oeuvre par un dispositif d'analyse, lorsque ce programme est exécuté par ce dispositif d'analyse et un support d'enregistrement lisible par un dispositif d'analyse sur lequel est enregistré un programme pour un dispositif d'analyse.

Les avantages énoncés pour le procédé de collecte d'informations relatives à un flux acheminé selon le premier aspect sont transposables directement au programme pour un dispositif d'analyse et au support d'enregistrement.

La technique de collecte d'informations relatives à un flux acheminé dans un réseau de communication sera mieux comprise à l'aide de la description suivante de modes de réalisation particuliers, en référence aux dessins annexés sur lesquels :
- les figures 1 et 2 illustrent les principes d'un réseau de communication défini par logiciel ;
- les figures 3a et 3b illustrent des étapes d'un procédé de collecte d'informations relatives à un flux acheminé dans un réseau de communication selon deux modes de réalisation particuliers ;
- la figure 4 représente un dispositif d'analyse dans un mode de réalisation particulier.

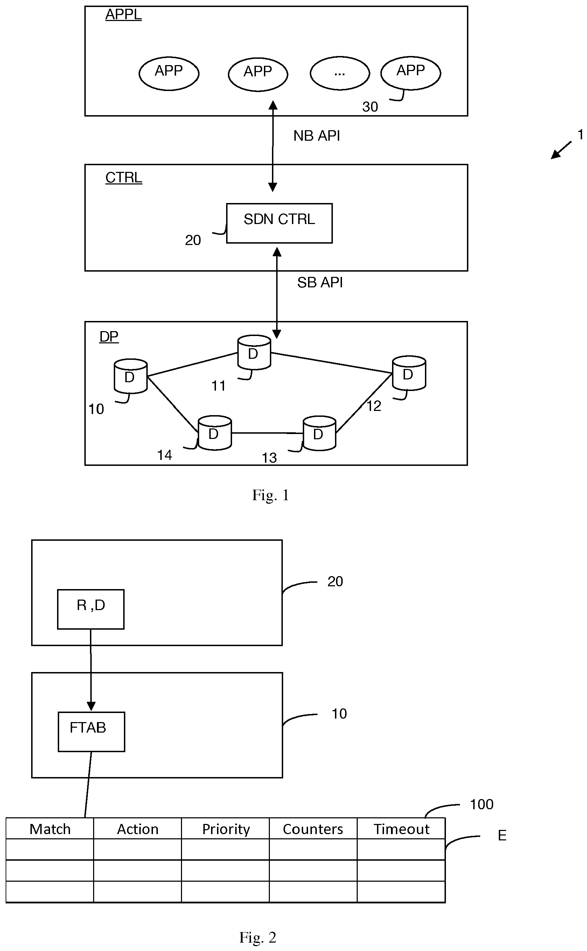

Pour faciliter la compréhension de la technique de collecte d'informations relatives à un flux acheminé dans un réseau de communication, les principes généraux d'une architecture d'un réseau de communication défini par logiciel SDN (« *Software-Defined Network* ») sont rappelés brièvement, en référence aux figures 1 et 2. Une telle architecture est décrite en détail dans le document édité par l'ONF (« Open Networking Foundation ») intitulé « Software-Defined Networking: The New Norm for Networks », 13 avril 2012. Dans l'exemple retenu pour illustrer ces principes, l'architecture SDN repose sur l'utilisation du protocole OpenFlow^{™}.

La **figure 1** représente un réseau de communication défini par logiciel dans lequel est mis en oeuvre le procédé de collecte d'informations relatives à un flux acheminé dans ce réseau dans un mode de réalisation particulier.

Comme mentionné précédemment, le concept SDN permet de spécifier le comportement d'équipements de réseau ou dispositifs de traitement à l'aide de programmes de contrôle haut niveau, ce qui permet d'automatiser aisément certaines tâches comme la configuration des dispositifs de traitement du réseau ou la gestion des politiques (ou services) appliquées au niveau du réseau.

A cet effet, l'architecture SDN centralise l'intelligence du réseau (i.e. les fonctions de contrôle du réseau et de ses dispositifs de traitement) dans un dispositif de contrôle (ou contrôleur) logiciel. Dans le mode de réalisation décrit ici, le dispositif de contrôle est un dispositif de contrôle logiciel, programmable, qui commande des dispositifs de traitement ou commutateurs à l'aide de règles de traitement, via le protocole OpenFlow^{™}. Le protocole OpenFlow^{™} est décrit notamment dans le document « Openflow switch specification, version 1.5.1 », Mars 2015.

Le comportement des dispositifs de traitement en présence de données relatives à un terminal ou plus précisément à une session de communication, est alors défini par le dispositif de contrôle au moyen de règles dites de traitement ou de transfert, transmises aux dispositifs de traitement. Ces règles sont stockées par les dispositifs de traitement dans des tables dites de flux (ou « *flow tables* » en anglais) et sont destinées à être appliquées par ceux-ci sur réception de paquets ou de flux de données. Elles spécifient notamment les dispositifs de traitement vers lesquels transférer les données (i.e. le trafic).

La **figure 1** résume ce mode de fonctionnement en modélisant schématiquement une architecture SDN selon trois couches :
- une couche inférieure DP, modélisant le plan de données (« *data plane* » en anglais) et comprenant des dispositifs de traitement D 10-14 (ou équipements de réseau) commandés (contrôlés) par un dispositif de contrôle 20 (ces dispositifs D peuvent être indifféremment physiques ou virtuels) ;
- une couche intermédiaire CTRL, modélisant le plan de contrôle (« *control plane* » en anglais) et comprenant le dispositif de contrôle 20 référencé par « SDN CTRL » ; et
- une couche supérieure APPL, modélisant le plan applicatif, comprenant diverses applications ou fonctions de contrôle APP utilisées par le dispositif de contrôle 20 pour commander les dispositifs de traitement 10-14 du plan de données DP et élaborer les règles de traitement.

Les différentes couches précitées communiquent entre elles via des interfaces de programmation ou API (« *Application Programming Interface* »), appelées « *NorthBound API* » et « *SouthBound API* » (notées respectivement « NB API » et « SB API » sur la figure 1).

Les interfaces de programmation SB API entre le dispositif de contrôle 20 et les dispositifs de traitement 10-14 dans le plan de données implémentent ici le protocole de communication OpenFlow^{™}.

Les dispositifs de traitement 10-14 du plan de données contrôlés par le dispositif de contrôle 20 à l'aide du protocole OpenFlow^{™} correspondent par exemple à des dispositifs de commutation ou commutateurs (« *switch* » selon la terminologie OpenFlow).

Les interfaces de programmation NB API peuvent implémenter n'importe quel protocole de communication ouvert, par exemple le protocole de communication XMPP.

Comme rappelé précédemment et illustré à la figure 1, le protocole OpenFlow^{™} permet au dispositif de contrôle 20 de commander chaque dispositif de traitement 10-14 (par exemple chaque commutateur) au moyen d'un ensemble de règles de traitement de paquets, incluant notamment des règles de transfert (ou d'acheminement) de paquets destinées à être appliquées par le dispositif de traitement sur réception de paquets relatifs à un flux réseau.

Ces règles de traitement sont déterminées par le dispositif de contrôle 20 par exemple en fonction de la politique de l'opérateur envisagée pour la gestion du réseau. Elles spécifient le traitement devant être appliqué par chaque dispositif de traitement sur réception d'un paquet d'un flux de données présentant des caractéristiques communes, et des paquets suivants associés au même flux.

Ces règles de traitement sont stockées au niveau de chaque dispositif de traitement 10-14 sous la forme de tables de flux FTAB, dont les entrées peuvent être modifiées par le dispositif de contrôle 20 à l'aide du protocole OpenFlow^{™} (ex. ajout, mise à jour, suppression d'entrées dans la table).

Dans le plan applicatif, un dispositif d'analyse 30 met en oeuvre une fonction de sécurité. Ce dispositif d'analyse 30 est apte à communiquer avec un ou des dispositifs de contrôle 20. Il peut en particulier :
- accéder à l'ensemble des tables de traitement de flux mises en oeuvre par les dispositifs de traitement sous contrôle d'un dispositif de contrôle ;
- commander à un dispositif de contrôle une installation d'une règle de traitement dans un dispositif de traitement ;
- accéder à des informations relatives à l'activité d'une règle, par exemple à différents compteurs mis en oeuvre par les dispositifs de traitement.

A titre illustratif, une entrée E d'une telle table de flux FTAB 100 est représentée sur la **figure 2****.** Elle se présente sous la forme de plusieurs champs ou paramètres destinés à être examinés par le dispositif de traitement 10 sur réception d'un paquet de données, en vue d'identifier quel traitement appliquer sur ce paquet (par exemple vers quel dispositif de traitement transférer ce paquet). Ces champs et paramètres sont représentés par le terme *Match.* Il s'agit d'une séquence de bits qui forme un prédicat vis-à-vis duquel tous les paquets qui correspondent au prédicat sont considérés comme appartenant à un même flux. Cette séquence de bits permet au dispositif de traitement de discriminer les paquets en entrée. Ces champs incluent par exemple des valeurs d'adresses sources et/ou destinataires, telles que des adresses MAC (*Medium Access Control*), source ou destination, et/ou des adresses IP, source ou destination, et/ou des numéros de port de communication, .... Un ou plusieurs champs peu(ven)t être spécifié(s) pour chaque entrée. Il(s) spécifie(nt) les champs qui doivent être présents dans l'entête des paquets auxquels se rapporte cette entrée E de la table de flux.

Chaque entrée E de la table définit également un champ *Action* définissant le traitement à appliquer à un paquet correspondant au prédicat (transférer à une autre table, transférer vers un équipement déterminé du réseau, supprimer le paquet, modifier l'entête du paquet, etc...). D'autres champs peuvent également être définis tels qu'un niveau de priorité *Priority* associé à la règle de traitement, un compteur *Counter* comptabilisant le nombre de paquets correspondants au prédicat et qui ont été traités en utilisant cette règle, une durée *Timeout* associée à la validité de la règle. Cette durée peut correspondre à une durée maximale (*hard-timeout*) de validité de la règle ou bien à une durée (*idle-timeout*) à l'issue de laquelle la règle expire si elle reste inactive pendant cette durée.

Le dispositif de traitement 10-14 utilise les tables de flux FTAB ainsi définies de la façon suivante. Sur réception d'un paquet de données, le dispositif de traitement 10-14 cherche dans les tables de traitement de flux FTAB qu'il a mémorisées si le prédicat du paquet correspond à une entrée *Match* de la table. Le cas échéant, les instructions associées à cette entrée indiquées dans le champ *Action* sont exécutées par le dispositif de traitement 10-14 sur le paquet de données.

Si en revanche, aucune entrée de la table ne coïncide avec l'entête du paquet reçu, le paquet va automatiquement correspondre à une règle de traitement dite *table-miss,* qui peut avoir pour action associée, l'envoi d'un Packet-In au dispositif de contrôle 20 pour demander l'installation d'une nouvelle entrée dans la table, autrement dit une nouvelle règle de traitement. Ce mode de mise à jour de règles correspond à un mode réactif.

La mise à jour de règles OpenFlow peut également s'effectuer selon un mode proactif, dans lequel le dispositif de contrôle 20 installe les règles de traitement de flux en amont, avant l'arrivée des premiers paquets (il est donc supposé ici, que le dispositif de contrôle a la connaissance en amont des flux de données qui vont être reçus par les dispositifs de traitement).

Les plans de contrôle et de données au sein de l'architecture SDN sont ainsi bien découplés.

Bien entendu, aucune limitation n'est attachée au nombre de dispositifs de traitement localisés dans le plan de données ni au nombre de dispositif de contrôle dans le plan de contrôle.

Le dispositif de contrôle 20 commande une pluralité de dispositifs de traitement. Plus précisément, il définit dans un plan de données des règles de traitement devant être appliquées par les dispositifs de traitement 10-14 aux paquets de données qu'ils reçoivent. Ces règles de traitement sont fournies par le dispositif de contrôle 20 aux dispositifs de traitement qu'il contrôle en s'appuyant sur le protocole OpenFlow^{™}.

Les règles de traitement fournies par le dispositif de contrôle 20 sont mémorisées au niveau de chaque dispositif de traitement 10-14 dans des tables de traitement de flux, dont les entrées peuvent être aisément modifiées (ex. ajout, mise à jour, suppression d'entrées dans la table) à l'aide du protocole OpenFlow^{™}.

Les règles de traitement utilisées par le dispositif de contrôle 20 pour commander les dispositifs de traitement 10-14 sont ici des règles de transfert des paquets de données IP reçus par ces équipements identifiant en fonction de différents critères vérifiés par l'entête de ces paquets (ex. adresse MAC ou IP source ou destinataire), le dispositif de traitement vers lequel transférer ces paquets.

Les dispositifs de traitement 10-14 sont par ailleurs configurés pour solliciter le dispositif de contrôle 20 via un message du protocole OpenFlow^{™}, lorsqu'ils reçoivent un paquet de données ne correspondant à aucune entrée de leurs tables de flux respectives. Sur réception de ce message, le dispositif de contrôle 20 crée une règle de traitement appropriée et met à jour les tables de flux des dispositifs de traitement concernés.

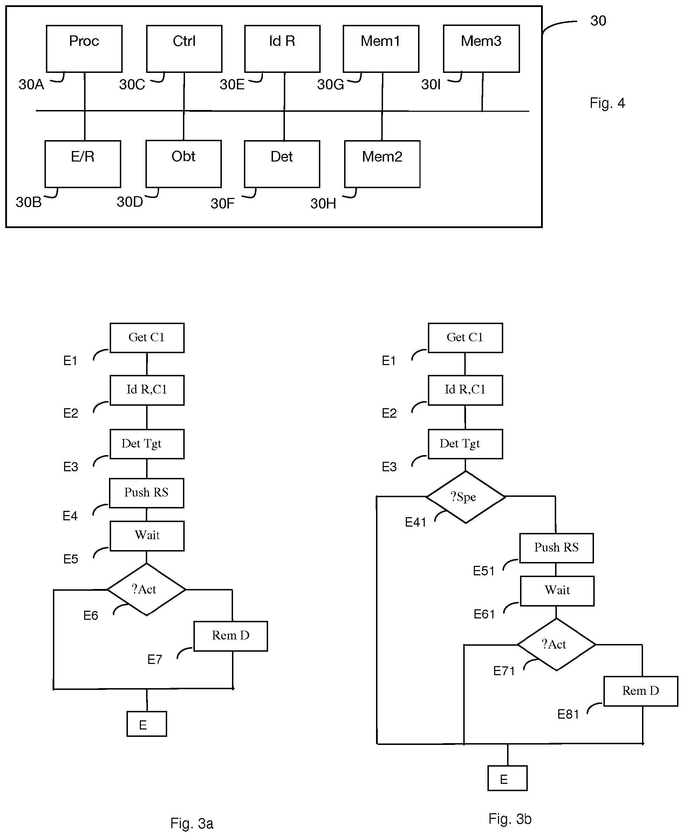

Le procédé de collecte d'informations relatives à un flux acheminé dans un réseau de communication, mis en oeuvre par le dispositif d'analyse, va maintenant être décrit en relation avec la **figure 3a****.** Comme décrit précédemment, le réseau de communication comprend :
- dans un plan de données des équipements de réseau ou dispositifs de traitement de paquets, configurés pour traiter des paquets en fonction de règles de traitement de flux,
- dans un plan de contrôle au moins un dispositif de contrôle 20, agencé pour contrôler les dispositifs de traitement de paquets 10-14 et pour gérer lesdites règles de traitement de flux et,
- dans un plan applicatif un dispositif d'analyse 30.

Dans une étape E1, le dispositif d'analyse 30 obtient une première caractéristique associée à un premier dispositif d'extrémité d'un flux à rechercher dans le réseau de communication. Ce premier dispositif d'extrémité est par exemple un dispositif émetteur qui a été identifié en tant qu'attaquant d'un ou de plusieurs deuxièmes dispositifs d'extrémité (en tant que dispositifs récepteurs correspondant aux cibles d'une attaque). Cette première caractéristique est par exemple envoyée au dispositif d'analyse 30 par une application de sécurité. Cette application de sécurité est par exemple une application antivirus s'exécutant localement dans un dispositif d'extrémité.

Dans une étape E2, le dispositif d'analyse 30 identifie au moins une règle de traitement de flux configurée pour traiter un flux comprenant (ou présentant) la première caractéristique à partir d'une mémoire de stockage 301 mémorisant l'ensemble des règles de traitement de flux contrôlées par le dispositif de contrôle 20 (et appliquées par des dispositifs de traitement 10-14). Chacune des règles de traitement est mémorisée en association avec un identifiant du dispositif de traitement 10-14 qui applique cette règle.

Dans une étape E3, le dispositif d'analyse 30 détermine une deuxième caractéristique associée à un deuxième dispositif d'extrémité à partir de la ou des règle(s) de traitement identifiée(s). Ceci permet de déterminer d'autres dispositifs d'extrémité associés à l'attaque en cours.

A titre illustratif, un flux réseau responsable d'une attaque par déni de service par inondation de paquets réseau vise une extrémité de réseau telle qu'un serveur web. Ce flux réseau, appelé flux réseau attaquant, est caractérisé simplement par une adresse IP source donnée, celle de la source de l'attaque (premier dispositif d'extrémité). La première caractéristique correspond par exemple à une adresse IP source IPv4 192.1.2.1. Les règles de traitement de flux qui permettent de traiter un flux comprenant cette adresse IP source, quelle que soit l'adresse IP de destination, sont ainsi identifiées (E2). A partir de ces règles de traitement identifiées, il est ainsi possible de déterminer (E3) comme deuxième caractéristique du flux l'adresse IP de destination. Le flux est associé à l'attaque en cours car il a pour origine l'adresse IP source d'un flux identifié comme attaquant. Ainsi, deux paquets ayant pour origine cette même adresse IP source (et le cas échéant pour destination des adresses IP destination différentes) appartiennent à des flux faisant partie de l'attaque en cours. La ou les adresses IP de destination déterminées correspondent à la deuxième caractéristique et permettent de déterminer de nouvelles cibles de l'attaque en cours (deuxièmes dispositifs d'extrémité).

Toujours à titre d'exemple illustratif, dans le contexte d'une attaque par déni de service distribué DDoS, le flux attaquant défini par une adresse IP source peut utiliser plusieurs autres ordinateurs sources (en tant que dispositifs émetteurs) pour mener son attaque. Une première itération des étapes E1-E3 permet ainsi d'identifier grâce à l'adresse IP source en tant que première caractéristique des adresses IP de destination associées aux autres ordinateurs sources (deuxième caractéristique). De nouvelles itérations des étapes E1-E3 pour chacune des autres sources (en tant que premières caractéristiques pour ces itérations) permettent d'identifier le cas échéant d'autres cibles de l'attaque en cours (deuxièmes caractéristiques). Ce suivi de flux réseau attaquant permet donc de détecter à l'échelle du réseau tout entier d'autres cibles et/ou sources engagées dans l'attaque détectée sur une première cible.

Toujours à titre d'exemple illustratif, dans le contexte d'une attaque par déni de service distribué DDoS, une première itération des étapes E1-E3 permet ainsi d'identifier grâce à l'adresse IP source en tant que première caractéristique une adresse IP de destination associée à une cible de l'attaque en cours (deuxième caractéristique). De nouvelles itérations des étapes E1-E3 pour l'adresse IP de destination en tant que première caractéristique permet d'identifier le cas échéant les autres ordinateurs sources mis à contribution dans l'attaque en cours (en tant que deuxièmes caractéristiques pour ces itérations). Ce suivi de flux réseau attaquant permet donc de détecter à l'échelle du réseau tout entier d'autres cibles et/ou sources engagées dans l'attaque détectée sur une première cible.

Le procédé de collecte permet ainsi de cartographier à l'échelle du réseau tout entier les attaques, en vue d'y réagir. Le procédé se différencie ainsi des méthodes connues qui s'appuient sur une analyse du trafic dans le réseau de manière unitaire pour juger dans l'absolu et un à un de son caractère malveillant. Grâce au procédé proposé, le flux attaquant est recherché dans le réseau de communication tout entier, c'est-à-dire parmi l'ensemble des paquets appartenant à un flux défini par une première caractéristique et correspondant à une attaque détectée sur une première cible. Ceci permet de protéger d'autres cibles potentielles de l'attaque en cours.

Dans un mode de réalisation particulier, au moins une règle de traitement de flux a été identifiée. Dans une étape E4, le dispositif d'analyse 30 commande au dispositif de contrôle 20 une installation dans les dispositifs de traitement qu'il contrôle d'une règle de traitement spécifique à la première caractéristique et à la deuxième caractéristique (en mode proactif). Cette règle de traitement spécifique vise à collecter des informations sur le flux dans l'ensemble du réseau de communication. L'installation de cette règle de traitement spécifique permet d'obtenir des informations qui se focalisent sur le flux à rechercher. Au terme d'une durée d'observation (E5), le dispositif de contrôle 20 vérifie dans une étape E6 si la règle de traitement spécifique est active. Si cette règle de traitement spécifique est bien active, alors le flux à rechercher est bien acheminé par le dispositif de traitement appliquant cette règle. Si elle n'est pas active, le flux à rechercher n'est pas acheminé par le dispositif de traitement appliquant cette règle. Dans une étape E7, le dispositif de traitement n'est pas retenu dans le cadre de la cartographie de l'attaque.

Dans un mode de réalisation particulier, la ou les règles de traitement de flux identifiées permettent de traiter au moins un deuxième flux distinct du flux à rechercher. Le dispositif de traitement mémorise bien une règle qui permet de traiter le flux à rechercher mais cette règle permet également de traiter ce deuxième flux distinct. En effet, il se peut qu'une règle de traitement mémorisée dans une table de traitement de flux englobe le traitement du flux à rechercher sans pour autant être exclusivement spécifique de celui-ci. A titre d'exemple, la première caractéristique correspond à l'adresse IP source IPv4 192.1.2.15 et la règle de traitement inclut dans le champ *Match* une adresse IP source IPv4 de la forme 192.1.2.1X. Cette règle de traitement comprend toutes les adresses IP source de 192.1.2.10 jusqu'à 192.1.2.19. Cette règle de traitement est identifiée par le dispositif de contrôle mais elle est appliquée pour des flux distincts du flux à rechercher. Elle peut être active du fait qu'elle traite un flux réseau qui ne correspond pas au flux à rechercher.

Ainsi, en référence à la **figure 3b****,** le dispositif d'analyse 30 vérifie dans une étape E41 si la règle de traitement identifiée est configurée pour traiter au moins un deuxième flux distinct du flux à rechercher. Si tel est le cas, dans une étape E51, le dispositif d'analyse 30 commande au dispositif de contrôle 20 une installation dans le dispositif de traitement appliquant la règle identifiée d'une règle de traitement spécifique à la première caractéristique (mode proactif). Cette règle de traitement spécifique vise à discriminer le flux à rechercher des autres deuxièmes flux. L'installation de cette règle de traitement spécifique permet d'obtenir des informations qui se focalisent sur le flux à rechercher. Au terme d'une durée d'observation (E61), le dispositif d'analyse 30 vérifie dans une étape E71 si la règle de traitement spécifique est active. Si cette règle de traitement spécifique est bien active, alors le flux à rechercher est bien acheminé par le dispositif de traitement appliquant cette règle. Dans un mode de réalisation particulier, le dispositif d'analyse 30 commande au dispositif de contrôle 20 d'interroger les dispositifs de traitement afin d'obtenir une valeur d'un compteur *Counters* mémorisant le nombre de paquets traités à l'aide de cette règle de traitement spécifique dans la table de traitement de flux 100. Si elle n'est pas active, le flux à rechercher n'est pas acheminé par le dispositif de traitement appliquant cette règle. Dans une étape E81, le dispositif de traitement n'est pas retenu dans le cadre de la cartographie de l'attaque.

Si à l'étape E41, le dispositif d'analyse a déterminé que la règle de traitement identifiée est spécifique, l'exécution du procédé de collecte s'arrête pour cette règle de traitement identifiée et est de nouveau mise en oeuvre pour une autre règle de traitement identifiée, le cas échéant.

Dans un mode de réalisation particulier, le dispositif d'analyse 30 a également obtenu une adresse IP de destination du flux à rechercher. Par exemple, l'application de sécurité a envoyé au dispositif d'analyse 30 la première caractéristique et l'adresse IP de destination (la cible de l'attaque). Pour certains types d'attaque, il peut également être intéressant de collecter des informations pour un sous-réseau auquel est rattachée l'adresse de destination. Ce sous-réseau correspond par exemple à une entreprise. Le dispositif d'analyse 30 commande au dispositif de contrôle 20 une installation dans les dispositifs de traitement qu'il contrôle d'une règle de traitement spécifique à la première caractéristique et à destination du sous-réseau auquel appartient l'adresse de destination (mode proactif). A l'issue d'une durée d'observation, le dispositif d'analyse 30 commande au dispositif de contrôle 20 d'interroger les dispositifs de traitement afin d'obtenir une valeur d'un compteur *Counters* mémorisant le nombre de paquets traités à l'aide de cette règle de traitement spécifique dans la table de traitement de flux 100. Le dispositif d'analyse 30 peut alors analyser cette valeur de compteur afin d'analyser le comportement de l'accès réseau sous attaque et juger de la saturation de ses accès réseau.

Afin de compléter les informations relatives à un flux à rechercher, le dispositif d'analyse 30 commande au dispositif de contrôle 20 une installation de toute règle spécifique et vérifie le caractère actif de cette règle, pour affiner sa recherche et son analyse des flux attaquants et de leurs impacts. A cet effet, le dispositif d'analyse 30 obtient une information représentative d'une activité de la règle de traitement spécifique.

Dans un mode de réalisation particulier, la durée de vie *Timeout* de la règle de traitement spécifique est fixée à la valeur par défaut de 65,535 secondes.

Les dispositifs de traitement maintiennent localement des compteurs de nombre de paquets traités par règle active, que le dispositif de contrôle peut consulter périodiquement. Ce mécanisme existant dans les réseaux SDN permet au dispositif d'analyse, dans un mode de réalisation particulier, de relever des mesures instantanées et un historique de la volumétrie des flux réseaux attaquants qui renseignent sur la cartographie des attaques et leur évolution dans le temps.

Dans un mode de réalisation particulier, une fois les cibles localisées par mise en oeuvre du procédé de collecte, l'analyse réseau au niveau des extrémités réseau est avantageusement complétée et coordonnée avec une analyse locale des ressources de calcul (CPU, mémoire) consommées par le ou les cibles sous attaque par une application de sécurité s'exécutant localement, afin d'affiner l'analyse des attaques.

La cartographie des attaques permet également un traitement de l'attaque au niveau des dispositifs de traitement, par exemple une suppression de trafic attaquant ou une dérivation de celui-ci pour analyse fine vers une sonde spécialisée. Pour cela, le dispositif d'analyse partage avec le dispositif de contrôle l'action à appliquer sur le flux attaquant, de sorte que le dispositif de contrôle installe la règle adéquate au niveau des dispositifs de traitement impliqués dans l'acheminement du flux attaquant.

L'analyse de l'attaque à l'échelle du réseau tout entier se concentre aisément sur les seuls flux attaquants en recherchant l'ensemble des paquets correspondant à un flux réseau attaquant qui a été caractérisé grâce à la détection de l'attaque au niveau d'une première cible. Cela est rendu possible grâce à la gestion des règles de traitement, auxquelles il est aisé d'accéder dans ce type de réseau SDN, qui sont applicables à ces flux recherchés. Le suivi de flux réseau permet d'une part l'analyse au niveau du protocole IP des flux réseaux attaquants puisque les paquets réseaux comprennent des informations d'adresse IP source et destinataire, et d'autre part une analyse topographique permettant la localisation des cibles en « suivant » les flux réseau cartographiés. La vue réseau des attaques peut ainsi être complétée par une vue locale des ressources de calcul impactées par les attaques au niveau des cibles.

On comprend que cette technique de collecte d'informations permet de détecter de manière efficace dans le réseau de communication, des paquets appartenant à un flux réseau caractérisé donné (associé à une attaque détectée au niveau d'une première cible) qui traversent des dispositifs de traitement (ou équipements de réseau) différents. Il est alors possible d'identifier l'existence d'autres cibles visées par une même attaque par déni de service (de même adresse IP source) à partir de la détection au niveau d'une première cible. Il est également possible d'identifier l'ensemble des ordinateurs engagés dans une attaque par déni de service distribué en cartographiant les flux dans le réseau de communication avec le contrôleur de cette attaque, à partir de la détection au niveau d'un premier ordinateur infecté.

Les mécanismes de gestion du plan de transfert dans les réseaux de communication définis par logiciel garantissent que les règles de traitement sont uniquement installées dans les dispositifs de traitement où elles sont effectivement utilisées. Ces règles de traitement ont une durée de vie au-delà de laquelle elles expirent, de sorte que les règles sont présentes uniquement dans les dispositifs de traitement où elles sont actives et effectivement appliquées pour traiter des flux relevant de ces règles. Autrement dit, la présence dans un dispositif de traitement d'une règle applicable à un flux donné suppose la présence effective de ce flux au niveau de ce dispositif (au délai d'expiration de la règle près) : en effet, en l'absence de ce flux, la règle de traitement n'aurait pas été installée ou aurait expiré faute d'activité de traitement de flux conforme à cette règle.

Les exemples illustratifs ont été donnés sur la base d'adresses de type IPv4. Aucune limitation n'est attachée à ce type d'adresse, la technique étant aisément transposable à d'autres types d'adresse.

La technique de collecte a été décrite dans le cadre du protocole OpenFlow. Aucune limitation n'est attachée à ce protocole. Cette technique est également applicable à d'autres protocoles tels que le protocole BGP-LS (pour « *Border Gateway Protocol-Link State* ») ou bien encore le protocole Cisco OpFlex.

Aucune limitation n'est attachée à ces différents modes de réalisation et l'homme du métier est à même d'en définir d'autres permettant de collecter des informations relatives à un flux acheminé dans un réseau de communication à partir des règles de traitement de flux, et le cas échéant, en installant des règles de traitement spécifiques dans des dispositifs de traitement.

La **figure 4** illustre de manière schématique un dispositif d'analyse dans un mode de réalisation particulier.

Le dispositif d'analyse 30 rattaché à un plan applicatif dans un réseau de communication comprend notamment :
- un processeur 30A pour exécuter des instructions de code de modules logiciels ;
- un module de communication 30B, formant une interface de communication, agencé pour communiquer avec un dispositif de contrôle dans un plan de contrôle ;
- une zone mémoire 30G, agencée pour mémoriser un programme qui comprend des instructions de code pour mettre en oeuvre des étapes du procédé de collecte d'informations relatives à un flux acheminé dans un réseau de communication ;
- une mémoire de stockage 30H, agencée pour stocker des données utilisées lors de la mise en oeuvre du procédé de collecte d'informations relatives à un flux acheminé ;
- une mémoire de stockage 301, agencée pour mémoriser des tables de flux respectivement associées à des dispositifs de traitement sous commande d'un dispositif de contrôle.

Le dispositif d'analyse 30 comprend également :
- un module de contrôle 30C, agencé pour contrôler un dispositif de contrôle dans un plan de contrôle par l'intermédiaire de l'interface de communication ;
- un module d'obtention 30D, agencé pour obtenir une première caractéristique associée à un premier dispositif d'extrémité d'un flux à rechercher dans le réseau de communication ;
- un module d'identification 30E, agencé pour identifier au moins une règle de traitement de flux configurée pour traiter un flux comprenant la première caractéristique et appliquée par un dispositif de traitement ;
- un module de détermination 30F, agencé pour déterminer une deuxième caractéristique associée à un deuxième dispositif d'extrémité à partir de la règle de traitement identifiée.

Dans un mode de réalisation particulier, le module d'obtention 30D est agencé pour recevoir d'une application de sécurité la première caractéristique associée à un premier dispositif d'extrémité d'un flux à rechercher dans le réseau de communication.

Dans un mode de réalisation particulier, le module de détermination 30F est en outre agencé pour déterminer une règle de traitement spécifique à la première caractéristique et à la deuxième caractéristique en fonction de la règle de traitement identifiée et le module de contrôle 30C est agencé pour commander au dispositif de contrôle une installation dans les dispositifs de traitement qu'il contrôle de la règle de traitement spécifique.

Dans un mode de réalisation particulier, le module de détermination 30F est en outre agencé pour déterminer une règle de traitement spécifique à la première caractéristique et à la deuxième caractéristique en fonction de la règle de traitement identifiée lorsque la règle de traitement identifiée est configurée pour traiter au moins un deuxième flux distinct du flux à rechercher et le module de contrôle 30C est agencé pour commander une installation dans le dispositif de traitement appliquant la règle identifiée de la règle de traitement spécifique.

Dans un mode de réalisation particulier, le module de contrôle 30C est en outre agencé pour obtenir d'un dispositif de contrôle une information représentative d'une activité de la règle de traitement spécifique.

Dans un mode de réalisation particulier, le module de détermination 30F est en outre agencé pour déterminer une règle de traitement spécifique configurée pour traiter des flux comprenant la première caractéristique et à destination d'un sous-réseau auquel appartient une adresse de destination caractérisant le flux à rechercher, et le module de contrôle 30C est agencé pour commander au dispositif de contrôle une installation dans les dispositifs de traitement qu'il contrôle de la règle de traitement spécifique.

Il est ici souligné que le dispositif d'analyse 30 comprend également d'autres modules de traitement, non représentés sur la figure 4, agencés pour mettre en oeuvre les différentes fonctions de ce dispositif d'analyse.

La technique de collecte d'informations relatives à un flux acheminé dans un réseau de communication est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en oeuvre une fonction ou un ensemble de fonctions, selon ce qui est décrit précédemment pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou non, avec ou sans processeur intégré pour l'exécution de logiciel. Il s'agit par exemple d'un circuit intégré, d'une carte à puce, d'une carte électronique pour l'exécution d'un micrologiciel (firmware), etc.

Dans un mode de réalisation particulier, les modules 30C, 30D, 30E, 30F sont agencés pour mettre en oeuvre des étapes du procédé de collecte d'informations relatives à un flux acheminé précédemment décrit, mises en oeuvre par un dispositif de contrôle. Il s'agit de préférence de modules logiciels comprenant des instructions logicielles pour faire exécuter celles des étapes (ou des actions) du procédé de collecte d'informations relatives à un flux acheminé précédemment décrit, mises en oeuvre par un dispositif d'analyse. L'invention concerne donc aussi :
- un programme pour un dispositif d'analyse, comprenant des instructions de code de programme destinées à commander l'exécution des étapes (ou des actions) du procédé collecte d'informations relatives à un flux acheminé précédemment décrit, lorsque ledit programme est exécuté par ce dispositif d'analyse ;
- un support d'enregistrement lisible par un dispositif d'analyse sur lequel est enregistré le programme pour un dispositif d'analyse.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

L'invention concerne également un système 1 de collecte d'informations relatives à un flux acheminé dans un réseau de communication.

Ce système 1 comprend :
- dans un plan de données des dispositifs de traitement de paquets 10-14, configurés pour traiter des paquets en fonction de règles de traitement de flux,
- dans un plan de contrôle au moins un dispositif de contrôle 20, configuré pour contrôler des dispositifs de traitement de paquets et pour gérer lesdites règles de traitement de flux, et
- un dispositif d'analyse 30 tel que décrit précédemment.

## Revendications

1. Procédé de collecte d'informations relatives à un flux acheminé dans un réseau de communication, ledit réseau comprenant dans un plan de données des dispositifs de traitement de paquets (10-14), configurés pour traiter des paquets en fonction de règles de traitement de flux et dans un plan de contrôle au moins un dispositif de contrôle (20), configuré pour contrôler des dispositifs de traitement de paquets et pour gérer lesdites règles de traitement de flux, ledit procédé comprenant pour un dispositif d'analyse (30) :
- une identification (E2) d'au moins une règle de traitement de flux configurée pour traiter un flux comprenant une première caractéristique associée à un premier dispositif d'extrémité d'un flux à rechercher dans le réseau de communication et appliquée par un dispositif de traitement ;
- une détermination (E3) d'une deuxième caractéristique associée à un deuxième dispositif d'extrémité à partir de la règle de traitement identifiée.

2. Procédé de collecte selon la revendication 1, comprenant une commande d'installation dans au moins un dispositif de traitement d'une règle de traitement spécifique à la première caractéristique et à la deuxième caractéristique.

3. Procédé de collecte selon la revendication 1, comprenant, lorsque la règle de traitement identifiée est configurée pour traiter au moins un deuxième flux distinct du flux à rechercher, une commande d'installation dans le dispositif de traitement appliquant la règle identifiée d'une règle de traitement spécifique à la première caractéristique et à la deuxième caractéristique.

4. Procédé de collecte selon la revendication 2 ou 3, comprenant une obtention d'une information représentative d'une activité de la règle de traitement spécifique.

5. Procédé de collecte selon la revendication 1, dans lequel le flux à rechercher est en outre **caractérisé par** une adresse de destination et dans lequel une installation d'une règle de traitement spécifique est commandée dans au moins un dispositif de traitement, ladite règle de traitement spécifique étant configurée pour traiter des flux comprenant la première caractéristique et à destination d'un sous-réseau auquel appartient l'adresse de destination.

6. Dispositif d'analyse (30) adapté à communiquer avec un dispositif de contrôle (20), ledit dispositif de contrôle étant rattaché à un plan de contrôle dans un réseau de communication, configuré pour contrôler des dispositifs de traitement de paquets rattachés à un plan de données dans ledit réseau et pour gérer des règles de traitement de flux appliquées par lesdits dispositifs de traitement pour traiter des paquets, ledit dispositif comprenant :
- un module d'identification (30E), agencé pour identifier au moins une règle de traitement de flux configurée pour traiter un flux comprenant une première caractéristique associée à un premier dispositif d'extrémité d'un flux à rechercher dans le réseau de communication et appliquée par un dispositif de traitement ;
- un module de détermination (30F), agencé pour déterminer une deuxième caractéristique associée à un deuxième dispositif d'extrémité à partir de la règle de traitement identifiée.

7. Système (1) de collecte d'informations relatives à un flux acheminé dans un réseau de communication, ledit système comprenant dans un plan de données des dispositifs de traitement de paquets (10-14), configurés pour traiter des paquets en fonction de règles de traitement de flux, dans un plan de contrôle au moins un dispositif de contrôle (20), configuré pour contrôler des dispositifs de traitement de paquets et pour gérer lesdites règles de traitement de flux, et un dispositif d'analyse (30) selon la revendication 6.

8. Programme pour un dispositif d'analyse, comprenant des instructions de code de programme destinées à commander l'exécution des étapes du procédé de collecte selon l'une des revendications 1 à 5 mises en oeuvre par le dispositif d'analyse, lorsque ledit programme est exécuté par ledit dispositif.

9. Support d'enregistrement lisible par un dispositif d'analyse sur lequel est enregistré le programme selon la revendication 8.

## Patentansprüche

1. Verfahren zum Sammeln von Informationen bezüglich eines in einem Kommunikationsnetz transportierten Flusses, wobei das Netz in einer Datenebene Paketverarbeitungsvorrichtungen (10-14), die konfiguriert sind, um Pakete abhängig von Flussverarbeitungsregeln zu verarbeiten, und in einer Steuerebene mindestens eine Steuervorrichtung (20) enthält, die konfiguriert ist, um Paketverarbeitungsvorrichtungen zu steuern und die Flussverarbeitungsregeln zu verwalten, wobei das Verfahren für eine Analysevorrichtung (30) enthält:
- eine Identifikation (E2) mindestens einer Flussverarbeitungsregel, die konfiguriert ist, um einen Fluss zu verarbeiten, der ein einer ersten Endvorrichtung eines im Kommunikationsnetz zu suchenden Flusses zugeordnetes erstes Merkmal enthält, und von einer Verarbeitungsvorrichtung angewendet wird;
- eine Bestimmung (E3) eines einer zweiten Endvorrichtung zugeordneten zweiten Merkmals ausgehend von der identifizierten Verarbeitungsregel.

2. Sammelverfahren nach Anspruch 1, das einen Installationsbefehl einer Verarbeitungsregel in mindestens einer Verarbeitungsvorrichtung enthält, die für das erste Merkmal und für das zweite Merkmal spezifisch ist.

3. Sammelverfahren nach Anspruch 1, das, wenn die identifizierte Verarbeitungsregel konfiguriert ist, um mindestens einen zweiten Fluss zu verarbeiten, der sich vom zu suchenden Fluss unterscheidet, einen Installationsbefehl einer für das erste Merkmal und für das zweite Merkmal spezifischen Verarbeitungsregel in der die identifizierte Regel anwendenden Verarbeitungsvorrichtung enthält.

4. Sammelverfahren nach Anspruch 2 oder 3, das einen Erhalt einer Information enthält, die für eine Aktivität der spezifischen Verarbeitungsregel repräsentativ ist.

5. Sammelverfahren nach Anspruch 1, wobei der zu suchende Fluss außerdem durch eine Zieladresse gekennzeichnet ist, und wobei eine Installation einer spezifischen Verarbeitungsregel in mindestens einer Verarbeitungsvorrichtung befohlen wird, wobei die spezifische Verarbeitungsregel konfiguriert ist, um Ströme zu verarbeiten, die das erste Merkmal enthalten und für ein Teilnetz bestimmt sind, zu dem die Zieladresse gehört.

6. Analysevorrichtung (30), die geeignet ist, mit einer Steuervorrichtung (20) zu kommunizieren, wobei die Steuervorrichtung an eine Steuerebene in einem Kommunikationsnetz angeschlossen ist, die konfiguriert ist, um Paketverarbeitungsvorrichtungen zu steuern, die an eine Datenebene im Netz angeschlossen sind, und um Flussverarbeitungsregeln zu verwalten, die von den Verarbeitungsvorrichtungen angewendet werden, um Pakete zu verarbeiten, wobei die Vorrichtung enthält:
- ein Identifikationsmodul (30E), das eingerichtet ist, um mindestens eine Flussverarbeitungsregel zu identifizieren, die konfiguriert ist, einen Fluss zu verarbeiten, der ein erstes Merkmal enthält, das einer ersten Endvorrichtung eines im Kommunikationsnetz zu suchenden Flusses zugeordnet ist, und von einer Verarbeitungsvorrichtung angewendet wird;
- ein Bestimmungsmodul (30F), das eingerichtet ist, um ein einer zweiten Endvorrichtung zugeordnetes zweites Merkmal ausgehend von der identifizierten Verarbeitungsregel zu bestimmen.

7. System (1) zum Sammeln von Informationen bezüglich eines in einem Kommunikationsnetz transportierten Flusses, wobei das System in einer Datenebene Paketverarbeitungsvorrichtungen (10-14), die konfiguriert sind, um Pakete abhängig von Flussverarbeitungsregeln zu verarbeiten, in einer Steuerebene mindestens eine Steuervorrichtung (20), die konfiguriert ist, um Paketverarbeitungsvorrichtungen zu steuern und die Flussverarbeitungsregeln zu verwalten, und eine Analysevorrichtung (30) nach Anspruch 6 enthält.

8. Programm für eine Analysevorrichtung, das Programmcodeanweisungen enthält, die dazu bestimmt sind, die Ausführung der Schritte des Sammelverfahrens nach einem der Ansprüche 1 bis 5 zu befehlen, die von der Analysevorrichtung durchgeführt werden, wenn das Programm von der Vorrichtung ausgeführt wird.

9. Speicherträger, der von einer Analysevorrichtung lesbar ist, auf dem das Programm nach Anspruch 8 gespeichert ist.

## Claims

1. Method for collecting information relating to a flow routed in a communication network, said network comprising, in a data plane, packet-processing devices (10-14) that are configured so as to process packets on the basis of flow-processing rules and, in a control plane, at least one control device (20) that is configured so as to control packet-processing devices and to manage said flow-processing rules, said method comprising, for an analysis device (30):
- identifying (E2) at least one flow-processing rule configured so as to process a flow comprising a first characteristic associated with a first endpoint device of a flow to be sought in the communication network and applied by a processing device;
- determining (E3) a second characteristic, associated with a second endpoint device, based on the identified processing rule.

2. Collection method according to Claim 1, comprising a command to install, in at least one processing device, a processing rule specific to the first characteristic and to the second characteristic.

3. Collection method according to Claim 1, comprising, when the identified processing rule is configured so as to process at least one second flow separate from the flow to be sought, a command to install, in the processing device applying the identified rule, a processing rule specific to the first characteristic and to the second characteristic.

4. Collection method according to Claim 2 or 3, comprising obtaining information representative of an activity of the specific processing rule.

5. Collection method according to Claim 1, wherein the flow to be sought is furthermore **characterized by** a destination address, and wherein installation of a specific processing rule is commanded in at least one processing device, said specific processing rule being configured so as to process flows comprising the first characteristic and destined for a subnetwork to which the destination address belongs.

6. Analysis device (30) designed to communicate with a control device (20), said control device being attached to a control plane in a communication network, configured so as to control packet-processing devices attached to a data plane in said network and to manage flow-processing rules applied by said processing devices in order to process packets, said device comprising:
- an identification module (30E), designed to identify at least one flow-processing rule configured so as to process a flow comprising a first characteristic associated with a first endpoint device of a flow to be sought in the communication network and applied by a processing device;
- a determination module (30F), designed to determine a second characteristic, associated with a second endpoint device, based on the identified processing rule.

7. System (1) for collecting information relating to a flow routed in a communication network, said system comprising, in a data plane, packet-processing devices (10-14) that are configured so as to process packets on the basis of flow-processing rules, in a control plane, at least one control device (20) that is configured so as to control packet-processing devices and to manage said flow-processing rules, and an analysis device (30) according to Claim 6.

8. Program for an analysis device, comprising program code instructions intended to command the execution of the steps of the collection method according to one of Claims 1 to 5 that are implemented by the analysis device when said program is executed by said device.

9. Recording medium able to be read by an analysis device and on which the program according to Claim 8 is recorded.
